Europäisches Patentamt

(19) European Patent Office

Office européen des brevets

(11) Veröffentlichungsnummer: **0 074 032**
**B1**

(12) # EUROPÄISCHE PATENTSCHRIFT

(45) Veröffentlichungstag der Patentschrift:
13.11.85

(51) Int. Cl.⁴: **G 11 B 15/60,** G 11 B 23/04,
H 05 F 3/02, G 11 B 23/50

(21) Anmeldenummer: 82107881.3

(22) Anmeldetag: 27.08.82

(54) **Magnetbandanordnung mit mindestens einem Bandführungselement und Magnetbandkassette mit einer solchen Magnetbandanordnung.**

(30) Priorität: 03.09.81 DE 8125650 U
23.12.81 DE 8137551 U

(43) Veröffentlichungstag der Anmeldung:
16.03.83 Patentblatt 83/11

(45) Bekanntmachung des Hinweises auf die Patenterteilung:
13.11.85 Patentblatt 85/46

(84) Benannte Vertragsstaaten:
AT BE CH DE FR GB IT LI NL SE

(56) Entgegenhaltungen:
DE - A - 3 010 772
US - A - 3 601 654

PATENTS ABSTRACTS OF JAPAN, Band 2, Nr. 109, 9.
September 1978, Seite 5886 E 78
PATENTS ABSTRACTS OF JAPAN, Band 5, Nr. 5, 14.
Januar 1981, Seite 677 P 44

(73) Patentinhaber: BASF Aktiengesellschaft,
Carl-Bosch-Strasse 38, D-6700 Ludwigshafen (DE)

(72) Erfinder: Balz, Werner, Dr., Carl-Bosch-Strasse 46,
D-6703 Limburgerhof (DE)
Erfinder: Muenzner, Wulf, Dr., Lorscher Ring 10,
D-6710 Frankenthal (DE)
Erfinder: Schomann, Klaus Dieter, Dr.,
Kopernikusstrasse 47, D-6700 Ludwigshafen (DE)
Erfinder: Berger, Heinz, im Loehl 9, D-7640 Kehl (DE)
Erfinder: Roos, Roland,
Philipp-Scheidemann-Strasse 24, D-6700 Ludwigshafen
(DE)

## Beschreibung

Magnetbandkassette, insbesondere Video-bandkassette, mit Kunststoffgehäuse, worin jeweils in Bandlaufrichtung das Magnetband von einer Abwickelrolle abgewickelt wird, dann mit mindestens je einem Einlauf-Führungselement auf Schichtseite und Folienseite des Magnetbandes in Kontakt steht und danach über mindestens je ein Auslauf-Führungselement in Kontakt mit Schichtseite und Folienseite auf einer Aufwickelbandrolle aufgewickelt wird und worin die Einlauf- und Auslauf-Führungselemente jeweils eine Umlenkrolle aufweisen und mindestens ein Verbindungsglied die Schicht- und Folienseiten des Magnetbandes zum Ladungsausgleich verbindet.

Bandführungseinrichtungen sind von Magnetbandgeräten für die Audio-, Video- und Datensignalaufzeichnung vielfältig bekannt. Es sind auch die verschiedensten Bandführungseinrichtungen wie Rollen, Zapfen usw. in Magnetbandkassetten bekannt.

Es ist ferner bekannt, daß mit der Erhöhung der Bandlaufgeschwindigkeiten auch die elektrostatischen Aufladungen der in Bewegungskontakt befindlichen Teile, wie Band und Bandführungsvorrichtungen, vergrößert werden und Kleben des Bandes an den Vorrichtungen auftritt, insbesondere bei ungünstigen klimatischen Bedingungen und/oder besonderen Magnetschicht- und Bandfolienkombinationen. Die Folge ist ein mindestens zeitweises Blockieren des Bandes, so daß Bandtransportvorgänge gestört oder unmöglich werden.

Es ist mit der DE-OS 30 10 772 für Magnetband-Kassetten für die Audio-Aufzeichnung auf Metallfilm-Magnetband bekannt, innerhalb der Kassette ein Entladungs- und Erdanschlußglied anzuordnen, das eine Leitverbindung von der Schichtseite des Magnetbandes zu einem Geräte-Erdpotentialanschluß herstellt. Die Verwendung eines solchen speziellen Gliedes erfordert Änderungen an der Kassette und eine Anpassung des Geräts, was wegen des damit verbundenen Aufwandes bei einem fertigen Kassettensystem vermieden werden muß. Eine Anwendung für Bandführungselemente ist nicht bekannt und nicht naheliegend.

Es ist für Videobänder allgemein bekannt, Rückschichten vorzusehen, die die Rauhigkeit der Folienseite der Bänder erhöhen, zur Verbesserung der Wickelfähigkeit der Bänder auf flanschlosen Wickelkernen. Dadurch wird die Gefahr des Bandklebens an Führungselementen durch Verkleinerung der Kontaktoberfläche mittelbar vermindert.

Es ist ferner bekannt, Leitschichten z. B. aus Ruß oder Graphit auf Bänder, insbesondere auf die Folienseite aufzubringen, um den Oberflächenwiderstand der jeweiligen Bandfläche zu erniedrigen. (Vgl. CH. Schneider, H. Völz »Magnetbänder und Grundlagen der Transportwerke« Akademie-Verlag Berlin 1970). Beide Änderungen am Band, Rückseitenbeschichtung und Leitschichtenausbildung, sind zu kostspielig, um Blockieren der Bänder in serienmäßig hergestellten Videokassetten zu vermeiden.

Es stellt sich daher als Aufgabe, ohne Änderung an den Magnetbändern das Bandblockieren zu vermeiden.

Mit der US-PS 36 01 654 ist es bekannt, in einer Kassette mit Plastik-Gehäuse eine Verbindung der Folienseite mit der Schichtseite des Magnetbandes dadurch herzustellen, daß in der Nähe einer ersten Umlenkrolle ein erster Bandführungsstift in Kontakt mit der Folienseite des Bandes mit der Schichtseite des Bandes auf dem Bandwickel über ein elektrisch leitfähiges Band verbunden ist. Die erste Umlenkrolle, die ebenfalls mit der Folienseite des Bandes in Kontakt steht, ist nicht in diesen Ladungsausgleich einbezogen, so daß eine einmal an der Umlenkrolle aufgebaute Ladung nicht abgebaut werden kann, sondern zu einem Blockieren des Bandes führen kann. Dasselbe gilt in verstärktem Maße für die zweite Umlenkrolle, die im Abstand zur ersten angeordnet ist und hinter der am zweiten Bandführungsstift wiederum ein Ladungsausgleich mit dem Bandwickel stattfindet. Aufladungsgefährdet sind also im wesentlichen die Umlenkrollen und der Bandabschnitt dazwischen.

Erst wenn ein Metall-Gehäuse oder ein flächenmäßig metallisiertes Gehäuse verwendet wird, ist ein ständiger Ladungsausgleich zwischen den Bandvorder- und -rückseiten erreichbar, was jedoch einen großen Aufwand darstellt.

Mit der JA-OS 55/135 376 ist eine Magnetbandkassette mit zwei Umlenkrollen bekannt, wo anstelle von üblichen ortsfesten Führungsstiften an beiden Bandseiten anliegende Schwenkarme zu Bandspann- und Ladungsausgleichszwecken vorgesehen sind. Eine Leitverbindung zur Umlenkrolle besteht hierbei ebenfalls nicht und die Schwenkarmvorrichtung ist erheblich aufwendig.

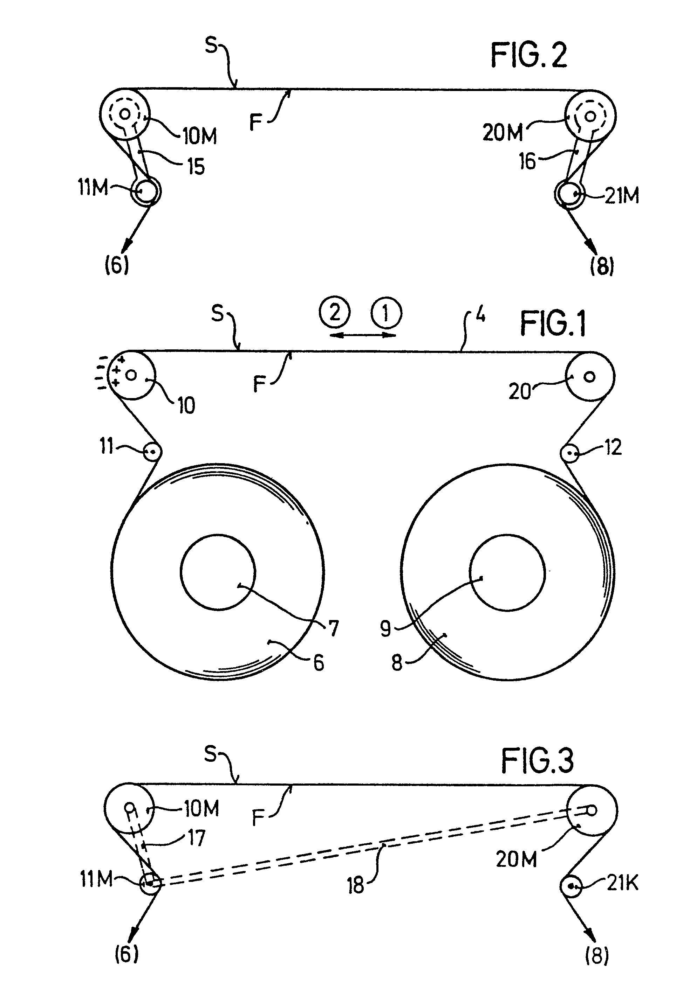

Mit der JA-OS 53/74 415 ist ferner eine Kassette mit zwischen Umlenkrollen und Bandwickeln angeordneten Polen aus Leitmaterial bekannt. Dabei sind diese Pole über das Kassettengehäuse, »das leitend gemacht ist«, verbunden und der elektrische Widerstand zwischen den Polen soll bei $18^8 \Omega$ (100 M $\Omega$) oder darunter gehalten werden. Zur Definition des Bereichs »darunter« ist aus der JA-OS 53/74 415, Fig. 2, zu entnehmen, daß damit der Widerstandsbereich von 1 M $\Omega$ gemeint ist. Unter diesem Gesichtspunkt, da das Entladungsrauschen gemäß Fig.2 zwischen 10 M $\Omega$ und 1 M $\Omega$ ausreichend gedämpft ist, besteht an noch niedrigeren Widerstandswerten, also auch an einem möglichst vollständigen Ladungsausgleich, offensichtlich gar kein Interesse.

Die Umlenkrollen der Kassette sind in diese Überlegungen — wie üblich aus den oben diskutierten Druckschriften — nicht einbezogen worden, so daß die oben geschilderten Nachteile auch hier auftreten.

Überraschenderweise wurde an handelsüblichen Videokassetten festgestellt, daß die Kassettenbänder beim Umspulen zumindest zeitweise an den Führungsrollen und -zapfen der Kassette klebten und Blockieren und/oder Bandumklappen verursachten.

Obengenannte Änderungen am Band, Rückseitenbeschichtung oder Leitschichtausbildung sowie das Anbringen aufwendiger Entladevorrichtungen sind für serienmäßige Magnetbandkassetten zu aufwendig, es wurde daher im Rahmen der gestellten Aufgabe nach einer einfachen und dennoch wirksamen Lösung des Blokkierproblems für Magnetbandkassetten, insbesondere für Videobandkassetten, gesucht.

Die gestellte Aufgabe wird dadurch gelöst, daß die Umlenkrollen, jeweils eine, wenigstens teilweise elektrisch leitfähige Oberfläche besitzen und diese über das mindestens eine Verbindungsglied leitend verbunden sind.

Dadurch wird erreicht, daß vorhandene und das Blockieren des Bandes an Führungselementen einschließlich der Bandumlenkrollen verursachende Ladungsmengen auf dem Band ausgeglichen werden.

Damit wird es durch Abbau der Reibungselektrizitätsmenge nunmehr überraschend möglich, die Oberflächen von Band und Führungselementen glatter auszubilden, so daß insbesondere bei der Videoaufzeichnung durch Erhebungen auf dem Band und Bandführungen hervorgerufene Signalstörungen vermeidbar werden.

Es ist zweckmäßig, wenn ein, wenigstens einseitig elektrisch leitfähiges Verbindungsglied in Anlage an der Bandschichtseite und an der Leitoberfläche der Umlenkrolle vorgesehen ist.

Das mindestens eine Verbindungsglied kann vorzugsweise zwischen Bandrolle und Führungselement oder in der Nähe des Führungselements angeordnet sein.

Dadurch wird durch eine auch nachträglich vorzunehmende, sehr einfache Änderung wenigstens im räumlichen Bereich einer Bandumlenkrolle die volle Bandtransport- bzw. Kassettenfunktion wiederhergestellt. Es ist möglich, den ohmschen Widerstand des Leit-Materials auf dem Verbindungsglied im Bereich bis 3 Megohm, inbesondere bis 1 Megohm, dem Oberflächenwiderstand von Chromdioxid-Videobändern, zu wählen. Ferner können die Leit-Materialien auch aus Widerstandsmaterial oder Metall oder einem Leitlack- oder nicht gut leitendem (halbleitendem) Lacküberzug bestehen.

Zweckmäßig kann der Widerstand auch bei einem oder mehreren 100 Kiloohm liegen, wodurch der Ladungsausgleich beschleunigt wird. In der Praxis kann das leitfähige Verbindungsglied aus Widerstandsmaterial bestehen, wie z. B. Kohleschichten usw. Es ist vorteilhaft auch möglich, einen Metallkörper oder einen Leitlack oder einen Halbleiterlack als Leitmaterialien für das Verbindungsglied zu benutzen.

Praktisch kann das Verbindungsglied aus flachem, mindestens teilweise flexiblem Bandmaterial bestehen, z. B. auf einem metallischen oder metallisierten Folienmaterial oder ähnlichem. Es kann aus mehreren teilweise zusammenhängenden Teilen bestehen, z. B. als geschlitzter bandförmiger Körper, wobei erste Teile an einer Bandseite und zweite Teile am Führungselement, beispielsweise an der Führungsfläche selbst, an Führungsflanschen oder an der Stirnseite des Führungselements anliegt. Eine ständige Anlage muß jedoch sichergestellt sein.

Praktisch kann das Verbindungsglied aus einem Folienstück, insbesondere mit einem geschlitzten freien Ende, bestehen, wobei der eine Endteil an der Bandschichtseite und der andere Endteil an der Leitoberfläche des Bandführungselements anliegt und das Folienstück am Kassettengehäuse geeignet befestigt ist.

Damit wird durch eine einfache und wirksame Änderung an der Kassette eine schwerwiegende Bandlaufstörung, die insbesondere bei Magnetbändern mit sehr unterschiedlichen Oberflächenwiderstandswerten auf Schicht- und Folienseite auftreten, behebbar.

In einer weiteren erfindungsgemäßen Magnetbandkassette derselben Art ist es zweckmäßig, sowohl die einzelnen Einlauf-Führungselemente über ein erstes Verbindungsglied als auch die Auslauf-Führungselemente über ein zweites Verbindungsglied elektrisch leitfähig zu verbinden.

Es ist ferner vorteilhaft, wenn die Verbindungsglieder jeweils zwischen den Umlenkrollen und einem weiteren Führungselement der Einlauf-Führungselemente vorgesehen sind. Dadurch wird es möglich, weitere Führungselemente aus isolierendem Material zu verwenden, auch wenn diese weiter voneinander entfernt sind.

In praktischer Ausführung kann die elektrisch leitfähige Verbindung aus Metallblech bestehen, das einfach in die Kassette, auch nachträglich, einsetzbar ist.

In jedem Fall soll das Verbindungsglied flexibel oder federnd ausgebildet sein und derartig in der Kassette angeordnet sein, daß ein ständiger Kontakt, vorzugsweise Flächenkontakt, mit der Schichtseite des Bandes und der Leitoberfläche des Führungselements gewährleistet ist.

Um ein zweites Verbindungsglied gegebenenfalls einzusparen, kann eine Leitverbindung die Führungselemente verbinden, die sowohl aus Metallblech, einem Graphit oder Kohle enthaltenden Lack oder Kunststoff, einer metallisierten Folie, z. B. einer Beilagefolie bestehen kann.

Die Bandkassette ist zweckmäßig ausgebildet, wenn das Folienstück geeignet, z. B. durch Klemmmittel, befestigt ist und gegebenenfalls einen Leitschuh aufweist und vorteilhaft das Folienstück oder der Leitschuh aus einem Kunststoffmaterial mit Leitmittel, insbesondere Graphit oder Ruß besteht. Wenn mehr als zwei Führungselemente, z. B. Umlenkrollen auf der Folienseite angeordnet sind, sollen diese durch das Verbindungsglied leitend verbunden sein.

In weiterer, praktisch günstiger Ausführung kann das Leitmaterial aus einem Graphit oder Kohle enthaltenden Lack bestehen, der einfach in der Kassette bei Herstellung oder nachträglich anbringbar ist.

Es ist schließlich auch denkbar, in einer Kassette, die eine Gleitschicht oder -folie für die Bandrollen besitzt, diese metallisiert auszubilden und sie in direktem Kontakt mit Teilen der Führungselemente als Leitverbindung zu verwenden.

In praktisch günstiger Ausführung kann das Leitmaterial aus einem Graphit oder Kohle enthaltenden Lack bestehen, der einfach in der Kassette bei Herstellung oder nachträglich anbringbar ist.

Es ist ferner ebenfalls möglich, daß ein erstes Verbindungsglied zwischen einer Bandrolle und dem nächstliegenden Führungselement angeordnet ist und an der Bandschichtseite anliegt und daß zwischen dem Verbindungsglied und dem nächstliegenden Führungselement ein weiteres Verbindungsglied angeordnet ist.

Unter der Eigenschaft »leitfähig« wird im Sinne vorliegender Erfindung verstanden, daß eine Elektronen- und Defektelektronenleitung stattfindet, und zwar in einem möglichst kurzen Zeitraum. Es eignen sich daher alle als Leiter und Halbleiter bekannten Metalle und Stoffe für den Einsatz als »leitfähige Verbindung«. Isolierstoffe oder Stoffe, die nur zeitweise leitfähig sind, sind ungeeignet, die Verbindung zum Ladungsausgleich von Schicht- zur Folienseite des Bandes technisch zu realisieren.

Wird eine Magnetbandanordnung, im wesentlichen bestehend aus einer Abwickelrolle, den Bandführungselementen für Schicht- bzw. Folienseite und der Aufwickelrolle, betrachtet, so können elektrostatische Ladungen an folgenden Stellen des Systems auftreten.

Durch die Reibung zwischen Band und Führungselementen entstehen Reibungselektrizität oder elektrische Influenz und beide Körper, Band und Führungselement, werden elektrostatisch aufgeladen. Dabei kann diese Ladung auch zusätzlich auf jedem Körper durch Trennung der sowieso vorhandenen Ladungsmengen entstehen.

Durch die Trennung des Magnetbandes von der äußeren Bandwindung der Abwickelrolle kann außerdem eine Ladungstrennung zwischen abgezogenem Band und zurückbleibender äußerer Bandwindung erfolgen, so daß eine Kontaktspannung entsteht. Im Normalfall werden positive und negative Ladungsmengen getrennt, die auf den entsprechenden Bandstellen weitertransportiert werden.

In beiden Fällen handelt es sich um nicht unterscheidbare elektrostatische Ladungserzeugung oder -trennung und deren Vorzeichen ist von der relativen Dielektrizitätskonstanten des Materials bestimmt.

Ein weiterer Faktor hat dabei Bedeutung, nämlich die Ladungsaffinität, durch die bestimmt wird, auf welcher Oberfläche welchen Körpers zu welchem Zeitpunkt eine größere oder kleinere Ladungsmenge vorhanden ist. Hierbei spielt neben der jeweiligen relativen Dielektrizitätskonstanten die momentane Beschaffenheit der beteiligten Oberflächen eine wichtige Rolle. Dazu gehört auch, daß die Entfernbarkeit der jeweiligen Ladungen unterschiedlich ist, z. B. von Schichtseite und Folienseite des Bandes. Dabei sind Ladungen von der Folie schwieriger abzuführen.

Die vorstehenden Betrachtungen über die Erzeugung und Verteilung auftretender elektrostatischer Ladungen erheben keinen Anspruch auf Vollständigkeit oder unbedingte Korrektheit, da es bekannterweise äußerst schwierig ist, die Herkunft und/oder die Größe solcher Ladungen zu bestimmen, da elektrostatische Ladungen überall vorhanden sind und damit die Messungen unvermeidbar beeinflußt werden.

Einzelheiten der Erfindung sind nachfolgend anhand von in der Zeichnung dargestellten Ausführungsbeispielen beschrieben.

In der Zeichnung ist dargestellt in

Fig. 1 eine Magnetbandanordnung nach dem Stand der Technik,

Fig. 2 eine erste Magnetbandanordnung nach der vorliegenden Erfindung,

Fig. 3 eine zweite Magnetbandanordnung gemäß vorliegender Erfindung,

Fig. 4 ein Motor-Last-Diagramm eines Chromdioxid-Magnetbandes in einer Anordnung gemäß Fig. 1,

Fig. 5 ein Motor-Last-Diagramm desselben Magnetbandes in einer Anordnung gemäß Fig. 2 und Fig. 3,

Fig. 6 eine zweite Magnetbandanordnung nach der Erfindung, insbesondere eine Magnetbandkassette, mit zwei verschieden angebrachten Verbindungsgliedern,

Fig. 7 eine weitere Anordnung mit einem Verbindungsglied und einer Leitverbindung zwischen den Umlenkrollen,

Fig. 8 eine perspektivische Umlenkrolle mit einem an einer Wandung angebrachten Folienstück,

Fig. 9 eine Umlenkrolle mit einem Schnitt durch ein Kassettengehäuseteil und ein geknicktes Folienstück,

Fig. 10 eine Draufsicht auf eine Ecke einer Magnetbandkassette,

Fig. 11 ein Verbindungsglied als Folienstück mit Leitschuh.

Eine Magnetbandanordnung gemäß Fig. 1 besteht im wesentlichen aus einem Magnetband 4 mit Schichtseite S und Trägerseite F, das von einer Abwickelrolle 6 auf einer Spule 7 zu einer Aufwickelrolle 8 auf einer Spule 9 oder umgekehrt gewickelt wird. Auf dem Weg von der Rolle 6 zur Rolle 7 wird das Band über Bandführungselemente 10 und 20, sowie 11 und 12, im allgemeinen Führungsrollen oder -zapfen, bewegt, wobei zwischen den Elementen üblicherweise der Kontakt mit dem hier nicht dargestellten Magnetkopf stattfindet. Je nachdem, in welchem Winkel das Band die Führungselemente umschlingt, sind die Kontaktteile zwischen Band und Elementen 10 oder 20, 11 oder 21 verschieden groß.

Fig. 1 kann die Bandführungsanordnung in einem der bekannten Videokassetten-Systeme darstellen. Darin sind die Elemente 10 und 20 Metallhülsen, die auf kassettenfesten Kunststoffachsen angeordnet sind und 11 ist ein Metallstift, während 21 ebenfalls ein Metallstift oder eine Metallrolle ist.

Bei Betrieb der Kassette, insbesondere bei schnellem Vor- und Rückspulen des Bandes 4 innerhalb der Kassette (Geschwindigkeit etwa 0,8 m/sec) steht das Band in Reibkontakt mit den Führungs- und/oder Umlenkelementen, wodurch es zur Erzeugung von Reibungselektrizität kommt. Dabei ist zwischen den Elementen 11 und 21 durch die anliegende Magnetschicht S erfolgende Ladungstrennung gering, da eine hierdurch entstehende Reibspannung zwischen Schicht und 11 bzw. 21 infolge der relativ guten Leitfähigkeit der Schicht sofort wieder abgebaut wird. Anders ist es auf der Rückseite des Bandes: Die hier von Führungselementen, z. B. 10, auf das Band übergegangene Ladung 12 ist auf der isolierten Bandoberfläche unbeweglich und wird durch die Bandbewegung vom Führungselement wegtransportiert.

Infolge der Reibung der Folienseite F an den Metallzapfen 10 und 20 gibt das Metall große Mengen freier Elektronen an die Folie F ab und wird dadurch selbst positiver. Infolge der einander gegenüberstehenden ungleichnamigen Ladungen tritt ein Blockeffekt auf. Da die negative Ladung auf der Schichtseite S und die auf den Führungszapfen 10 und 20 entstandene positive Ladung nur durch die dünne Folie getrennt ist, entsteht zwischen Band und Zapfen eine erhebliche elektrostatische Anziehungskraft, die das Band 4 zum Kleben und Blockieren bringt, so daß die Magnetbandanordnung für die Benutzung untauglich wird.

Zusätzlich muß in jedem Fall angenommen werden, daß aufgrund der Trennung des Bandes 4 vom Wickel 6 bzw. 8 von einer sowieso erhöhten Ladungsmenge (durch die Kontaktladung) auf der Folie F ausgegangen werden muß, die den Block- oder Klebeffekt noch weiter verstärkt.

Beim in allen folgenden Versuchsanordnungen benutzten Magnetband handelt es sich um ein handelsübliches Videomagnetband mit Chromdioxid-Magnetschicht, das einen Schichtwiderstand (Oberflächenwiderstand gemessen mit quadratischer Prüfanordnung auf der Schichtseite) von ca. $10^6 \, \Omega$ besitzt. Solche Chromdioxid-Bänder besitzen Schichtwiderstände im Bereich von etwa $10^5$ bis $5 \cdot 10^7 \, \Omega$ je nach Art des Chromdioxid-Materials, Größe der Chromdioxid-Partikel, Füllungsgrad der Schicht, verwandten Schichtzusätzen, die Ionenleitung erhöhen, sowie Bindemittel. Die Folie der Bänder hat einen üblichen Oberflächenwiderstand zwischen $10^{12} \, \Omega$ und $10^{14} \, \Omega$. Eine übliche Meßanordnung besteht aus einer zweiteiligen und zweipoligen Auflagefläche für das Band, das bei Messung plan aufliegt und einer Widerstands-Meßbrücke. Gemessen wird der auf eine quadratische Bandfläche bezogene Widerstandswert, bei dem die momentanen Umgebungsbedingungen automatisch berücksichtigt sind, wie Oberflächenbeschaffenheit, Feuchtigkeit, Verschmutzung usw.

Fig. 2 zeigt eine erste erfindungsgemäße Magnetbandanordnung. Alle Führungselemente 10 und 20 bzw. 11 und 21 sind wie in Fig. 1 aus elektrisch leitfähigem Material, beispielsweise aus Metall ausgebildet, und deshalb mit dem Zusatz »M« bezeichnet. Erfindungsgemäß sind die Führungselemente 10M und 11M bzw. 20M und 21M durch je ein leitfähiges Verbindungsglied 15 bzw. 16 zum Ladungsausgleich der Bandseiten S und F miteinander verbunden.

Im Beispiel sind hier die Verbindungsglieder 15 und 16 als Metallblechbügel dargestellt. Das Verbindungsglied kann jedoch jedes leitfähige Material wie Graphit, Molybdänsulfit, andere halbleitende Stoffe, Leitlack oder auch Widerstandsmaterial wie Kohle usw. aufweisen.

Dadurch kann die negative Ladung von der Schicht S zum Führungselement 11M und weiter über das Leitverbindungsglied 15 zum Führungselement 10M abfließen, d. h. es findet ein Ladungsausgleich statt, so daß die Ladungsdifferenz zwischen Führungselement 10M und Schichtseite S abgebaut wird und damit auch die Anziehungskräfte verschwinden. Dadurch wird auch die Kontaktfläche zwischen Band und Führungselement verringert, wodurch wiederum die Entstehung der Reibungselektrizität von Anfang an verhindert wird, d. h. der Effekt des Ladungsausgleichs bringt auch die Ladungen nach und nach zum Verschwinden. In Versuchen kann entsprechend bei gleichzeitigem Berühren von 10 und 20 bzw. 11 und 21 mit einem Draht, eine blockierende Anordnung zu einwandfreiem Lauf gebracht werden.

Die leitfähige Verbindung kann praktisch auch durch eine Metalleinlage oder -auflage im oder auf dem Verbindungsglied hergestellt werden. Zweckmäßig sollte der Widerstandswert der Verbindung so bemessen sein, daß die vorhandene Ladungsmenge in ausreichend kurzer Zeit abgeführt wird, damit das Band nicht am Führungselement haftet.

In einer weiteren Ausführung in Fig. 3 ist im Unterschied z. B. in Fig. 2 die Führungsrolle 21 aus Kunststoff hergestellt, 21K. Hier entspricht das Verbindungsglied 17, das z. B. aus einem Graphitstreifen in der Kassette bestehen kann, dem Leitblech 15 in Fig. 2. Da die Rolle 21K nun aus Kunststoff besteht, ist für die Bandlaufrichtung 2, Rücklauf, erst an den Führungselementen 10M und 11M ein Ladungsausgleich möglich, was jedoch an den Führungselementen 20M und 21K auch infolge der einander gegenüberstehenden Materialien mit sehr unterschiedlichen Oberflächenwiderstandswerten (Metall ca. $0 \, \Omega$, Kunststoff ca. $10^{12} \, \Omega$, Schicht ca. $10^6 \, \Omega$, Folie ca. $10^{12} \, \Omega$) zum Kleben des Bandes und damit zum Blockieren des Transports führt. Abhilfe schafft das Leitverbindungsglied 18, das ein Leitblech innen oder außen, z. B. an einer Kassettenwand oder entlang einem Steg in der Kassette oder eine metallisierte Schicht oder Folie über den Bandrollen 6 und 8 oder eine Leitlack- oder Halbleiterlack-Verbindung sein kann. Ergebnis ist ein einwandfreier Lauf der Magnetbandanordnung.

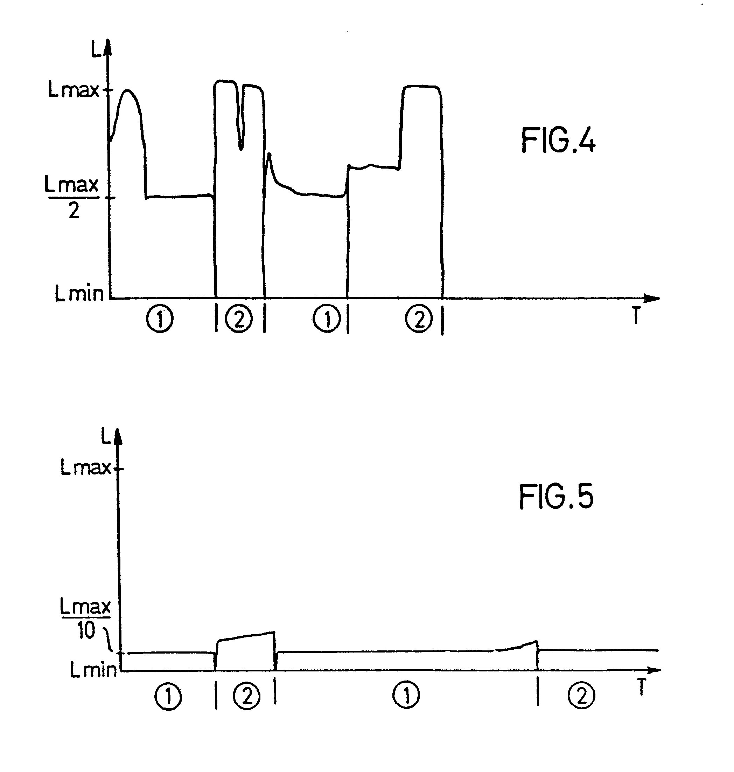

Fig. 4 und 5 zeigen anhand von Motor-Last-Diagrammen die Verhältnisse bei einer Anordnung nach Fig. 1 und demgegenüber die überraschenden Ergebnisse der erfindungsgemäßen Anordnungen aus Fig. 2 und 3.

Fig. 4 zeigt den Stromverlauf einer stark blockierenden Bandanordnung, bei der jeweils bei absolutem Bandstillstand durch Richtungsumkehr ein Bandlauf wieder hergestellt werden mußte. Durchschnittlich war ein Wechsel zwischen halber Last $\frac{L\,max}{2}$ und Vollast L max zu verzeichnen. 1 bezeichnet die Vorlaufrichtung, 2 die Rücklaufrichtung.

Dagegen wurde im Fall einer Anordnung gemäß Fig. 2 mit demselben Band, einem Chromdioxidband und derselben Kassette, jedoch mit als Metallbügel ausgebildeten Verbindungsgliedern 15 und 16, ein sehr gleichmäßiger ungestörter Bandlauf erhalten, bei dem etwa ein Zehntel der Vollastenergie benötigt wurde $\left(\frac{L\,max}{10}\right)$.

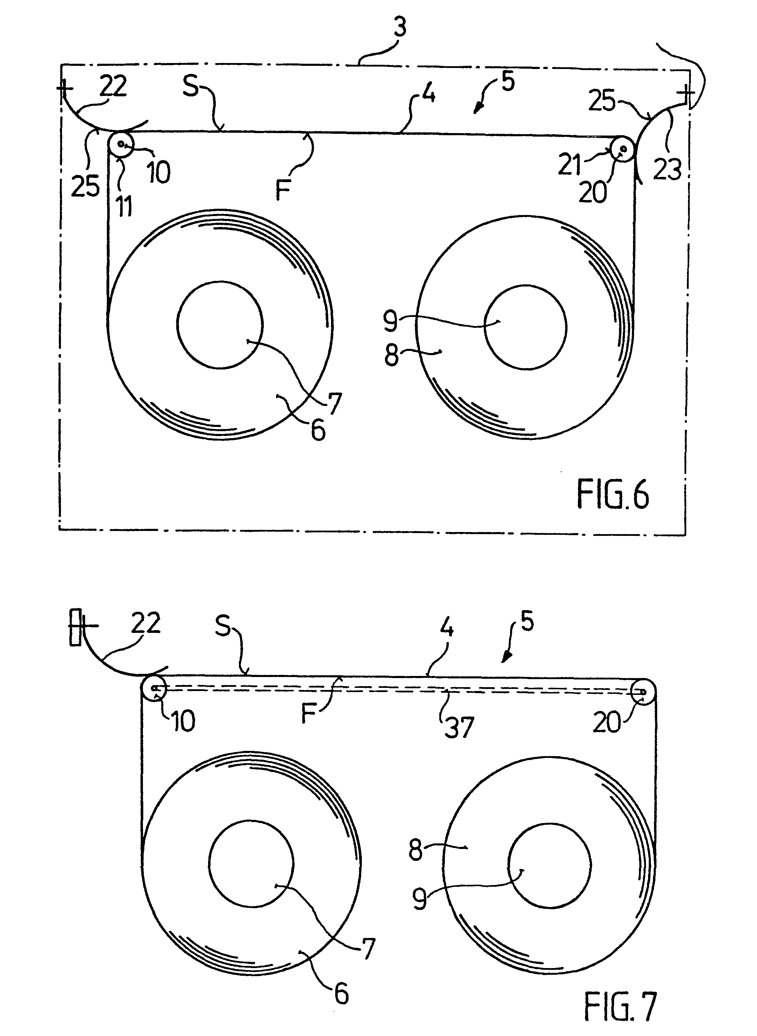

Eine weitere Magnetbandanordnung 5 (Fig. 6) besteht im wesentlichen aus einem Magnetband 4 mit Schichtseite S und Folienseite F, das von einer Abwickelrolle 6 auf einer Spule oder einem Wickelkern 7 zu einer Aufwickelrolle 8 auf einer Spule oder einem Wickelkern 9 oder umgekehrt aufgewickelt wird.

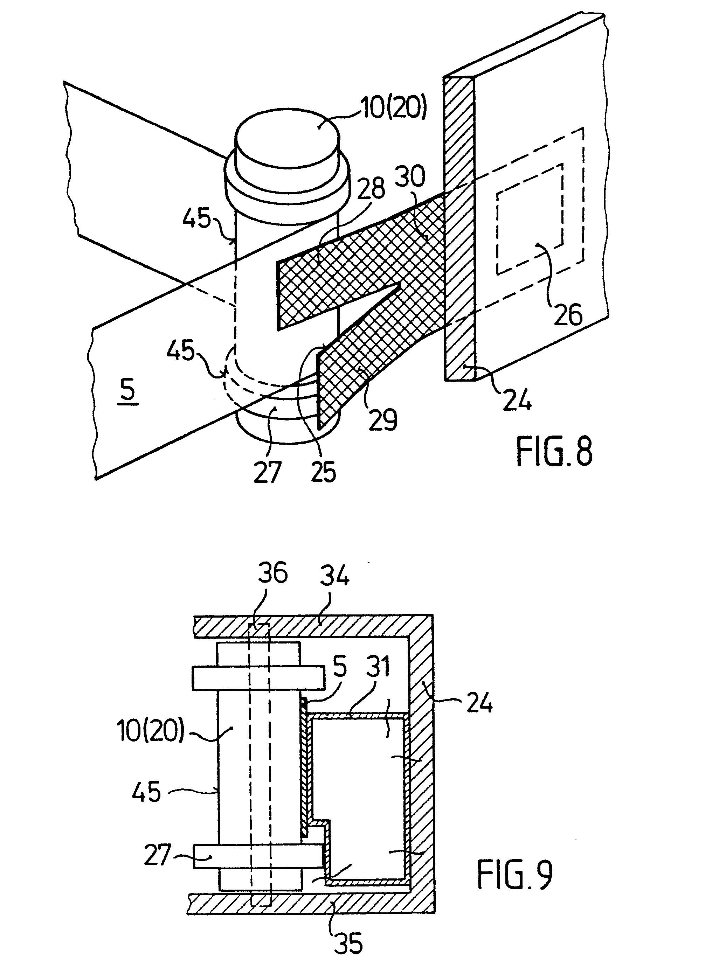

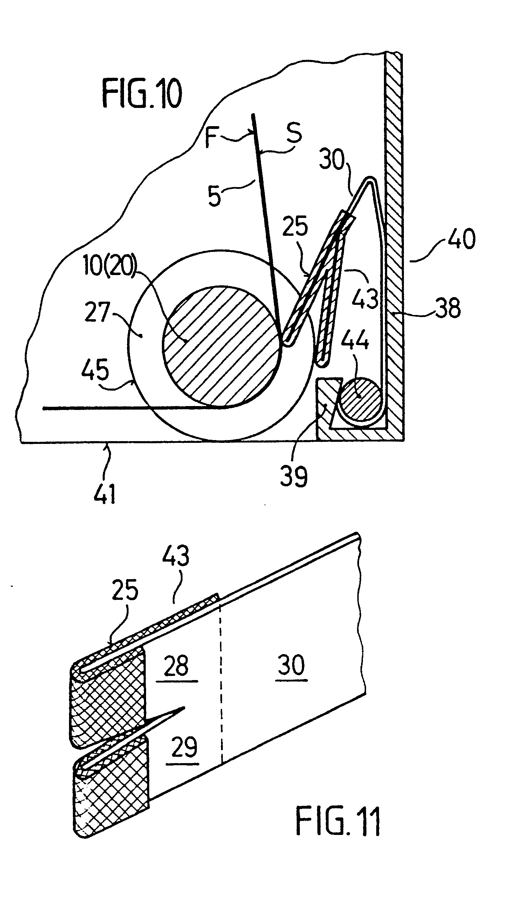

Auf dem Weg zwischen den Rollen 6 und 7 wird das Band 4 wieder über Bandführungselemente 10 und 20, im allgemeinen Führungsrollen oder -zapfen bewegt, wobei zumindest die Oberflächen der Führungselemente elektrisch leitfähig sein sollen und im folgenden als Leitfläche 45 bezeichnet werden. Die Magnetbandanordnung 5 kann wie gestrichelt dargestellt in einer Magnetbandkassette 3 vorgesehen sein. In der Nähe jeder der Umlenkrollen 10 und 20 oder wenigstens in der Nähe einer der Rollen 10 und 20, ist vorteilhaft ein wenigstens einseitig elektrisch leitfähiges Verbindungsglied 22 bis 23, hier angedeutet als flexibles Glied, vorgesehen. Einfachheitshalber haben die Glieder 22 und 23 etwa die gleiche Form, sie sind nur verschieden an der seitlichen Kassettenwand 24 angebracht, was geeignet, z. B. über Gummierungskleber, zweiseitige Klebfolien, vgl. 26 in Fig. 8, oder andere Haftbefestigungsarten erfolgen kann, was jedoch auch durch Einstecken in Einschnitte der Kassettenwand 24 oder Festklemmen zwischen Gehäusefortsätzen oder ähnlich erfolgen kann, wie in Fig. 10 gezeigt. Die flexiblen Verbindungsglieder 22 und 23 haben wenigstens eine Leitfläche 25, die wie dargestellt an der Außen- oder Schichtseite S des Bandes 4 ständig, vorzugsweise in Flächenkontakt, anliegt. In Fig. 8 ist gezeigt, daß außer diesem Kontakt mit der Bandschichtseite gleichzeitig ein Kontakt mit der Leitoberfläche der Rollen 10 bzw. 20 selbst, hier am Rollenflansch 27 erfolgt, wodurch ein Ladungsausgleich vom Führungselement auf die Bandschichtseite S und gleichzeitig vom Führungselement auf die Bandfolienseite F und damit auch zwischen Schicht- und Folienseite stattfindet. Das Verbindungsglied 22 bzw. 23 kann z. B. auch zwischen der Bandrolle 6 oder 8 und dem nächsten Führungselement 10 bzw. 20 an der Bandschichtseite S anliegen, d. h. schleifen, und gleichzeitig kann zusätzlich zwischen dem Verbindungsglied 22 bzw. 23 eine beliebig geeignete leitende Verbindung zum Führungselement 10 und/oder 20 vorgesehen sein (vgl. Fig. 2 und 3).

In Fig. 8 wird der besagte Ladungsausgleich durch ein geschlitztes Folienstück 30 mit oberem und unterem Endteil 28 bzw. 29, die an der Schichtseite S bzw. am Flansch 27 anliegen, bewerkstelligt. Fig. 9 zeigt eine Ausführung eines geknickten Folienstücks 31, das mit einem Teil 32 an der Bandschicht S und dem anderen Teil 33 am Flansch 27 anliegt. Das Folienstück 31 ist einfachheitshalber schlauchförmig dargestellt und an der Wand 24 befestigt. Es sind viele andersartige gleichwertige Ausführungen denkbar.

Die Rolle 10 oder 20 ist hier zwischen den oberen und unteren Gehäusewänden 34 bzw. 35 auf einer Achse 36 drehbar gelagert. Es ist nur ein Verbindungsglied 22 oder 23 oder 30 oder 31 an einer der Rollen notwendig, wenn — wie in Fig. 7 gezeigt — eine Extra-Leitverbindung 37 in geeigneter Weise zwischen den Rollen in oder an der Kassette oder auf dem Gerät vorgesehen ist.

In Fig. 10 ist ein Eckteil einer Magnetbandkassette 40 dargestellt. Die Seitenwand 38 bildet eine Nische 39 unmittelbar im Eckbereich an der Kassetten-Vorderseite 41. Eine Umlenkrolle 10 oder 20 ist wieder mit einem unteren Flansch 27 dargestellt und das Band 5 gleitet über deren Leitoberfläche 45. Hier dient ein Folienstück 30, teilweise geknickt und mit einem Leitschuh 43 versehen, der die Endteile 28 und 29 leitend überzieht und leitend verbindet, und vorzugsweise aus einem Kunststoffmaterial, z. B. Polytetrafluorethylen oder Polyoxymethylen, mit Gleitmittelanteil, z. B. Graphit, Ruß usw. besteht, dem Ladungsausgleich am Führungselement. Ein derartiger Kunststoff-Leitschuh 43, mit einem Graphit-Anteil von ca. 20 bis 50% hat einen Oberflächenwiderstand von ca. 300 Ohm. Die Befestigung des Folienstücks erfolgt direkt in der Nische 39 durch Festklemmen mittels eines Stiftes 44, der einfach zu montieren ist und größtmögliche Sicherheit gegen Herausfallen bietet.

Wenn hier auch nur Folien-Ausführungen der Verbindungsglieder 22, 23, 30, 31 beschrieben sind, so ist bei der Ausbildung der Verbindungsglieder 22, 23, 30, 31 wesentlich, daß sie aus Band- oder Streifenmaterial, das aufgrund seines Materials und/oder seiner Form und/oder seiner Anbringung flexibel ist, um einen ständigen Kontakt zu gewährleisten.

Selbstverständlich kann auch statt des Stiftes eine Haftverbindung, z. B. wie in Fig. 8 vorgesehen sein.

Soweit oben von Leitoberflächen, Leitschichten, Leitflächen, Leitkörpern die Rede ist, wird darunter eine Leitfähigkeit im Bereich unter etwa 3 Megohm und vorzugsweise im Bereich unterhalb 1 Megohm verstanden. In jedem Fall ist es zweckmäßig, höchstens einen ohmschen Widerstand im Bereich des Oberflächenwiderstandes der Schichtseite S des Bandes zu wählen. Bei Chromdioxidband liegt dieser z. B. bei ca. $10^5$ bis $5 \cdot 10^7$ Ohm je nach Art des Chromdioxidmaterials, Größe der Partikel, Füllungsgrad der Schicht, verwandten Schichtzusätzen, die die Ionenleitung der Schicht erhöhen sowie dem jeweiligen Bindemittel. Man wird die Leitfähigkeit den gegebenen Verhältnissen entsprechend so groß wie möglich wählen, möglichst nahe 0 Ohm.

In jedem Fall spielt die Leitfähigkeit der Bandschicht selbst eine wesentliche Rolle dabei, ob mehrere leitende Führungselemente leitend verbunden werden müssen oder nicht.

Betreffend das Folienmaterial des Verbindungsgliedes können alle Arten von Metall- oder Kunststoff-Folien mit einer Dicke etwa zwischen 20 und 200 µm verwendet werden. Kunststoff-Folien können dabei auch Leitmittelanteile von Graphit, Ruß usw. enthalten.

Es sind beliebig weitere Kombinationen von verschiedenen Anordnungen, Formen, Materialien usw. möglich, wenn nur der Bandumspulbetrieb oder der Bandtransport mit höherer Geschwindigkeit, d. h. oberhalb etwa 50 cm/sec ohne elektrostatische Aufladungseffekte, ermöglicht wird.

Die Ergebnisse in Fig. 4 und 5 konnten auch durch die Kassettenausbildungen der Fig. 6 bis 11 erreicht werden.

**Patentansprüche**

1. Magnetbandkassette, insbesondere Videobandkassette, mit Kunststoffgehäuse, worin jeweils in Bandlaufrichtung das Magnetband (4) von einer Abwickelrolle (6) abgewickelt wird, dann mit mindestens je einem Einlauf-Führungselement (11 bzw. 10) auf Schichtseite (S) und Folienseite (F) des Magnetbandes (4) in Kontakt steht und danach über mindestens je ein Auslauf-Führungselement (21 bzw. 20) in Kontakt mit Schichtseite (S) und Folienseite (F) auf einer Aufwickelbandrolle (8) aufgewickelt wird und worin die Einlauf- und Auslauf-Führungselemente jeweils eine Umlenkrolle (10, 20 bzw. 10M, 20M) aufweisen und mindestens ein Verbindungsglied (15, 16, 17) die Schicht- und Folienseiten (S u. F) des Magnetbandes (5) zum Ladungsausgleich verbindet, dadurch gekennzeichnet, daß die Umlenkrollen (10, 20) jeweils eine, wenigstens teilweise elektrisch leitfähige Oberfläche besitzen und diese mit dem mindestens einen Verbindungsglied (15, 16 bzw. 17, 18, 22, 23; 30, 31; 22; 37; 30; 31) leitend verbunden sind.

2. Kassette nach Anspruch 1, dadurch gekennzeichnet, daß ein, wenigstens einseitig elektrisch leitfähiges Verbindungsglied (22, 23, 30, 31) in Anlage an der Bandschichtseite (S) und an der Leitoberfläche der Umlenkrolle (10, 20) vorgesehen ist.

3. Kassette nach Anspruch 1, dadurch gekennzeichnet, daß die Einlauf-Führungselemente (10, 11 bzw. 10M, 11M) miteinander über ein erstes Verbindungsglied (15, 17) in Verbindung stehen und daß die Auslauf-Führungselemente (20M, 21M) über ein zweites Verbindungsglied (16) miteinander verbunden sind.

4. Kassette nach Anspruch 1, dadurch gekennzeichnet, daß Verbindungsglieder (17, 18) jeweils zwischen beiden Umlenkrollen (10, 20 bzw. 10M, 20M) und einem weiteren Führungselement (11M) der Einlauf-Führungselemente (10M, 11M) vorgesehen sind.

5. Kassette nach Anspruch 1 bis 4, dadurch gekennzeichnet, daß der ohmsche Widerstand des Verbindungsgliedes (15 bis 18, 22, 23, 30, 31, 37) im Bereich bis 3 Megohm liegt.

6. Kassette nach Anspruch 1 bis 4, dadurch gekennzeichnet, daß der ohmsche Widerstand des leitfähigen Materials des Verbindungsgliedes (15 bis 18, 22, 23, 30, 31, 37) in der Größenordnung des Oberflächenwiderstandes der Bandschichtseite (S), insbesondere im Bereich bis 1 Megohm liegt.

7. Kassette nach Anspruch 1 bis 4, dadurch gekennzeichnet, daß das leitfähige Material aus Widerstandsmaterial besteht.

8. Kassette nach Anspruch 1 bis 4 und 6, dadurch gekennzeichnet, daß das Verbindungsglied ein Metallblechkörper (15, 16) ist.

9. Kassette nach Anspruch 1 bis 7, dadurch gekennzeichnet, daß das Verbindungsglied (15 bis 18, 22, 23, 30, 31, 37) eine Beschichtung aus Leitlack, z. B. Graphit oder Kohle enthaltendem Lack, oder nicht gut leitendem Lack aufweist.

10. Kassette nach Anspruch 1 bis 9, gekennzeichnet durch ein metallisiertes Folienstück (15 bis 18, 22, 23, 30, 31, 37) als Verbindungsglied.

11. Kassette nach Anspruch 10, gekennzeichnet durch ein Folienstück (30) mit einem geschlitzten freien Ende, wobei ein Endteil (28) an der Bandschichtseite (S) und der andere Endteil (29) an der Leitoberfläche (45) der Umlenkrolle (10 bzw. 20) anliegt.

12. Kassette nach Anspruch 1 und einem oder mehreren der Ansprüche 2 bis 11, dadurch gekennzeichnet, daß das Verbindungsglied (22, 23, 30) flexibel ist und zwischen Kassettenwand (24) und Umlenkrolle (10, 20) angeordnet ist, daß ein ständiger Kontakt, mit der Schichtseite S des Bandes (4) und der Leitoberfläche (45) der Umlenkrolle (10, 20) erreicht wird.

13. Kassette nach Anspruch 12, dadurch gekennzeichnet, daß das Verbindungsglied (22, 23, 30, 31) am Kassettengehäuse (24) insbesondere durch Einklemmen befestigt ist.

14. Kassette nach Ansprüchen 12 und 13, dadurch gekennzeichnet, daß das Verbindungsglied aus einem mindestens einem mindestens einseitig leitfähigen Folienstück (22, 23, 30, 31) besteht.

15. Kassette nach Anspruch 12 oder 13 und 14, dadurch gekennzeichnet, daß das freie Ende des Verbindungsgliedes (30) geschlitzt ist, so daß ein Endteil (28) an der Bandschichtseite (S) und der andere Endteil (29) an der Leitoberfläche (45) Umlenkrolle (10 bzw. 20) anliegt.

16. Kassette nach Anspruch 1, dadurch gekennzeichnet, daß ein erstes Verbindungsglied (22, 23) zwischen einer Bandrolle (6 oder 8) und dem nächstliegenden Führungselement (10 bzw. 20) angeordnet ist und an der Bandschichtseite (S) anliegt und daß zwischen dem Verbindungsglied (22, 23) und dem nächstliegenden Führungselement (10 bzw. 20) ein weiteres Verbindungsglied (15, 17, 18) angeordnet ist.

## Claims

1. A magnetic tape cassette, especially a video tape cassette, comprising a plastics housing in which — successively in the direction of tape travel — the magnetic tape (4) is unwound from a supply reel (6), then makes contact with at least one ingress guide element (11) on the magnetic layer side (S) and with at least one ingress guide element (10) on the plastics film side (F), and is subsequently wound onto a take-up reel (8) after passing over at least one egress guide element (20) in contact with the plastics film side (F), and over at least one egress guide element (21) in contact with the magnetic layer side (S), and in which the ingress and egress guide elements each comprise a guide roll (10, 20; 10M, 20M), and at least one connector (15, 16, 17) connects the magnetic layer side (S) and the plastics film side (F) of the magnetic tape (5) for the purpose of charge equalization, wherein the guide rolls (10, 20) each have a surface, at least part of which is electrically conductive, and are conductively connected to said at least one connector (15, 16; 17, 18; 22, 23; 30, 31; 22; 37; 30; 31).

2. A cassette as claimed in claim 1, wherein there is provided a connector (22, 23, 30, 31) which is electrically conductive on at least one side and is in contact with the magnetic layer side (S) and with the conductive surface of the guide roll (10, 20).

3. A cassette as claimed in claim 1, wherein the ingress guide elements (10, 11; 10M, 11M) are connected together via a first connector (15, 17), and the egress guide elements (20M, 21M) are connected together via a second connector (16).

4. A cassette as claimed in claim 1, wherein a connector (17) is provided between the guide roll (10; 10M) and a further guide element (11M) of the ingress guide elements (10M and 11M), and a connector (18) is provided between the guide roll (20; 20M) and said further guide element.

5. A cassette as claimed in claims 1 to 4, wherein the ohmic resistance of the connector (15—18, 22, 23, 30, 31, 37) is up to 3 megohms.

6. A cassette as claimed in claims 1 to 4, wherein the ohmic resistance of the conductive material of the connector (15—18, 22, 23, 30, 31, 37) is of the order of the surface resistance of the magnetic layer side (S), especially up to 1 megohm.

7. A cassette as claimed in claims 1 to 4, wherein the conductive material consists of resistance material.

8. A cassette as claimed in claims 1 to 4 and 6, wherein the connector is a sheet metal member (15, 16).

9. A cassette as claimed in claims 1 to 7, wherein the connector (15—18, 22, 23, 30, 31, 37) has a coating of conductive varnish, e.g. varnish containing graphite or carbon, or a coating of varnish exhibiting poor conductivity.

10. A cassette as claimed in claims 1 to 9, comprising a piece of metallized plastics film (15—18, 22, 23, 30, 31, 37) as connector.

11. A cassette as claimed in claimed in claim 10, comprising a piece of plastics film (30) having a slit free end, one end portion (28) contacting the magnetic layer side (S) and the other end portion (29) contacting the conductive surface (45) of the guide roll (10, 20).

12. A cassette as claimed in claim 1 and one or more of claims 2 to 11, wherein the connetor (22, 23, 30) is flexible and is so arranged between the cassette wall (24) and the guide roll (10, 20) that permanent contact with the magnetic layer side (S) of the tape (4) and with the conductive surface (45) of the guide roll (10, 20) is achieved.

13. A cassette as claimed in claim 12, wherein the connector (22, 23, 30, 31) is fastened to the cassette housing (24) in particular by clamping means.

14. A cassette as claimed in claims 12 and 13, wherein the connector consists of at least one piece of plastics film (22, 23, 30, 31) which is conductive on at least one side.

15. A cassette as claimed in claim 12, 13 or 14, wherein the free end of the connector (30) is slit, so that one end portion (28) contacts the magnetic layer side (5) and the other end portion (29) contacts the conductive surface (45) of the guide roll (10, 20).

16. A cassette as claimed in claim 1, wherein a first connector (22, 23) is arranged between a tape reel (6 or 8) and the nearest guide element (10, 20) and is in contact with the magnetic layer side (S), and a further connector (15, 17, 18) is arranged between the connector (22, 23) and the nearest guide element (10, 20).

## Revendications

1. Cassette de bande magnétique, en particulier cassette de bande vidéo, à boîtier en matière plastique, dans laquelle la bande magnétique (4) se déroule, dans le sens de déplacement de la bande, d'une bobine de déroulement (6) puis reste en contact, par la face couche (S) et la face feuille (F) de la bande magnétique (4), avec au moins un élément de guidage amont (11 ou 10) puis s'enroule sur un rouleau d'enroulement (21 ou 20) en passant sur au moins un élément de guidage aval (21 ou 20) en contact avec la face couche (S) et la face feuille (F) et où les éléments de guidage amont et aval comportent un rouleau de renvoi (10, 20 ou 10M, 20M) et au moins un organe de liaison (15, 16, 17) relie les faces couche et feuille (S et F) de la bande magnétique (5) pour équilibrer la charge, caractérisée par le fait que les rouleaux de renvoi (10, 20) possèdent chacun une surface au moins partiellement conductrice de l'életricité et celles-ci sont reliées conductrices à l'organe de liaison (15, 16 ou 17, 18, 22, 23; 30, 31).

2. Cassette selon la revendication 1, caractérisée par le fait qu'il est prévu un organe de liaison conducteur de l'électricité au moins sur une face (22, 23, 30, 31) en appui sur la face couche de la bande (S) et sur la surface conductrice du rouleau de renvoi (10, 20).

3. Cassette selon la revendication 1, caractérisée par le fait que les éléments de guidage amont (10, 11 ou 10M, 11M) sont reliés entre eux par un premier organe de liaison (15, 17) et que les éléments de guidage aval (20M, 21M) sont reliés entre eux par un second organe de liaison (16).

4. Cassette selon la revendication 1, caractérisée par le fait que sont prévus des organes de liaison (17, 18) respectivement entre les deux rouleaux de renvoi (10, 20 ou 10M, 20M) et un autre élément de guidage (11M) des éléments de guidage amont (10M, 11M).

5. Cassette selon la revendication 1 à 4, caractérisée par le fait que la résistance ohmique de l'organe de liaison (15 à 18, 22, 23, 30, 31, 37) est dans une zone allant jusqu à 3 megohm.

6. Cassette selon la revendication 1 à 4, caractérisée par le fait que la résistance ohmique de la matière conductrice de l'organe de liaison (15 à 18, 22, 23, 30, 31, 37) est de l'ordre de grandeur de la résistance superficielle de la face couche de la bande (S), en particulier dans la zone allant jusqu'à 1 megohm.

7. Cassette selon la revendication 1 à 4, caractérisée par le fait que la matière conductrice est en matière résistante.

8. Cassette selon les revendications 1 à 4 et 6, carctérisée par le fait que l'organe de liaison est un corps en tôle métallique (15, 16).

9. Cassette selon la revendication 1 à 7, caractérisée par le fait que l'organe de liaison (15 à 18, 22, 23, 30, 31, 37) comporte un revêtement en vernis conducteur, par exemple un vernis contenant du graphite ou du charbon, ou un vernis qui n'est pas bon conducteur.

10. Cassette selon la revendication 1 à 9, caractérisée par l'emploi d'un morceau de feuille métallisé (15 à 18, 22, 23, 30, 31, 37) comme organe de liaison.

11. Cassette selon la revendication 10, caractérisée par l'emploi d'un morceau de feuille (30) à extrémité libre fendue, une des parties d'extrémité (28) s'appliquant contre la face couche de la bande (S) et l'autre partie d'extrémité (29) contre la surface conductrice (45) du rouleau de renvoi (10 ou 20).

12. Cassette selon la revendication 1 et l'une ou plusieurs des revendications 2 à 11, caractérisée par le fait que l'organe de liaison (22, 23, 30) est flexible et disposé entre la paroi de cassette (24) et le rouleau de renvoi (10, 20) de manière à réaliser un contact permanent avec la face couche (S) de la bande (4) et la surface conductrice (45) du rouleau de renvoi (10, 20).

13. Cassette selon la revendication 12, caractérisée par le fait que l'organe de liaison (22, 23, 30, 31) est fixé au boîtier de cassette (24), en particulier par coincement.

14. Cassette selon la revendications 12 et 13, caractérisée par le fait que l'organe de liaison est constitué par un morceau de feuille (22, 23, 30, 31) coductrice au moins dur une face.

15. Cassette selon la revendication 12 ou 13 et 14, caractérisée par le fait que l'extrémité libre de l'organe de liaison (30) est fendue, de sorte qu'une des parties d'extrémité (28) s'applique contre la face couche de la bande (S) et l'autre partie (29) sur la surface conductrice (45) du rouleau de renvoi (10 ou 20).

16. Cassette selon la revendication 1, caractérisée par le fait qu'un premier organe de liaison (22, 23) est disposé entre un rouleau de bande (6 ou 8) et l'élément de guidage (10 ou 20) voisin et s'applique sur la face couche de la bande (S) et qu'un autre organe de liaison (15, 17, 18) est disposé entre le premier organe de liaison (22, 23) et l'élément de guidage (10 ou 20) voisin.

FIG.2

FIG.1

FIG.3

0 074 032

FIG.4

FIG.5

FIG.6

FIG. 7

10(20)

28  30

45

45

5

27  25

29

24

26

FIG.8

36    34

5    31

10(20)

45

27

24

35

FIG.9

FIG.10

F S
30
5
25
40
10(20)
27 43 38
44
45
39
41

43
25
28 30
29

FIG.11